# EUROPÄISCHE PATENTSCHRIFT

(11) **EP 0 532 850 B1**
(45) Veröffentlichungstag und Bekanntmachung des Hinweises auf die Patenterteilung: **03.04.1996**
(21) Anmeldenummer: 92111599.4
(22) Anmeldetag: 08.07.1992
(51) Int. Cl.: F16B 19/04, F16B 19/06

(54) **Blindniet**
Blind rivet
Rivet aveugle

(30) Priorität: 18.09.1991 DE 4131030
(43) Veröffentlichungstag der Anmeldung: 24.03.1993
(73) Patentinhaber: Daimler-Benz Aerospace Airbus Gesellschaft mit beschränkter Haftung, D-21129 Hamburg (DE)
(72) Erfinder: Krug, Jürgen, W-2080 Pinneberg (DE); Krüger, Holger, W-2150 Buxtehude (DE); Stölcken, Heinrich, W-2000 Hamburg 96 (DE)
(74) Vertreter: Hansmann, Dierk, Dipl.-Ing.

(56) Entgegenhaltungen:
- EP-A- 0 372 704
- DE-A- 2 733 007
- GB-A- 2 190 451
- US-A- 3 702 088
- Hucks Report Nr. HTT-91-1, "Mechanical Properties of the HUck Interference Blind Bolt"

## Beschreibung

Die Erfindung bezieht sich auf einen Blindniet, insbesondere für den Flugzeugbau. Zur Herstellung von Nietverbindungen an tragenden Bauteilen von Flugzeugen werden vorwiegend einfache Vollniete mit einem Schaft und einem Setzkopf verwendet, wobei der Schließkopf während der Montage durch plastische Formung des Schaftmaterials gebildet wird. Die Bildung des Schließkopfes geschieht hierbei beispielsweise durch Schlagen oder Quetschen. Derartige Vollniete bestehen aus fachüblichen Legierungen des Aluminiums, des Titans oder aus einer Nickel-Kupfer-Knetlegierung. Zum Setzen dieser Niete ist es erforderlich, Arbeitsgänge an der Setzkopf- und an der Schließkopfseite (Rückseite des Bauteils) durchzuführen. Auf diese Weise hergestellte Nietverbindungen sind daher recht lohnintensiv. Das Bedürfnis, Vollniete in einem automatischen Fertigungsablauf zu setzen, konnte bisher aufgrund der relativ komplizierten Arbeitsgänge nur bezüglich recht einfacher Bauteile befriedigt werden. Im Gegensatz zum Setzen der Vollniete bereitet das Setzen von sog. Blindnieten durch automatische Nietmaschinen keinerlei Probleme, da bei Blindnieten jegliche Arbeitsgänge auf der Rückseite eines Bauteils entfallen. Bei diesen Blindnieten ist der Nietschaft hohl und bildet so eine Niethülse. An die Niethülse ist der Setzkopf angeformt, wobei in die axiale Durchgangsbohrung der Hülse ein Ziehdorn mit einem verdickten Ende so eingesetzt ist, daß sich das verdickte Ende auf der Schließkopfseite befindet und zum Angriff eines Setzwerkzeuges ein hinreichend langes Ende des Dorns aus dem Setzkopf herausragt. Dieser Blindniet kann von einer automatischen Nietmaschine gesetzt werden, indem die Maschine den Niet aufgrund eines entsprechenden Programms in die dafür vorgesehene Nietbohrung einführt bis der Setzkopf das Material des Bauteils berührt und dann den Dorn in die Niethülse hineinzieht. Dabei dringt das verdickte Ende des Dorns in einen auf der Rückseite des Bauteils überstehenden Bereich der Hülse ein und weitet diesen auf, wodurch der Schließkopf gebildet wird. Bei Erreichen einer bestimmten Zugspannung innerhalb des Dorns reißt dieser an einer vorbestimmten Stelle ab, womit die Nietverbindung hergestellt ist. Bei anderen Ausführungsformen dieser Blindniete wird der überstehende Teil des Dorns in einem zusätzlichen Arbeitsgang abgetrennt.

Die US-A-3 702 088 zeigt einen Blindniet, dessen Dorn einen konischen Bereich mit umlaufenden Rillen aufweist. Beim Setzen dieses Niets tritt infolge der Konizität des Dorns und der daran angepaßten Hülse eine Durchmesservergrößerung der Niethülse ein, die innerhalb der Nietlöcher der zu verbindenden Teile eine Radialspannung (Lochleibung) hervorruft. Der Dorn des gesetzten Niets hält durch Selbsthemmung, die sich durch dessen konische mit Rillen versehene Form ergibt. Infolge der Lochleibung zeigen mit diesem Blindniet hergestellte Verbindungen eine sehr hohe Dauerfestigkeit. Da beim Setzen des Nietes nicht nur die Hülse sondern auch die Bohrungen der miteinander zu verbindenden Teile aufgeweitet werden, ergibt sich zwischen Schaft und Hülse eine sehr hohe Flächenpressung. Dieser Niet ist nur ordnungsgemäß montierbar, wenn die Durchmesservergrößerung der Hülse während des Setzens trotz der hohen Flächenpressung eine stetige Funktion der Zugkraft am Nietdorn ist. Dies bedeutet, daß der Setzvorgang nicht durch Kaltschweißen gestört werden darf.

Die Nietdorne und -Hülsen dieser Blindniete bestehen denn auch aus Stahl oder einer geeigneten Nickellegierung, deren geringe Neigung zum Kaltschweißen ja bekannt ist. Materialien, wie die insbesondere im Flugzeugbau aus Gewichtsgründen sehr vorteilhaft verwendeten Legierungen der Leichtmetalle Aluminium und Titan, zeigen demgegenüber eine äußerst starke Neigung zum Kaltschweißen, so daß sie als Herstellungsmaterial für Blindniete dieser Art nicht in Betracht kommen.

Die Firmenschrift Huck Report Nr. HTT-91-1, "Mechanical Properties of the Huck Interference Blind Bolt" betrifft gleichfalls den vorgenannten Blindniet ohne jedoch einen Lösungsweg zum Verhindern des Kaltschweißens aufzuzeigen.

Demgemäß liegt der Erfindung die Aufgabe zugrunde, einen gattungsgemäßen Blindniet so auszubilden, daß bei seiner Montage, ein Kaltschweißen zwischen Nietdorn und Niethülse sicher vermieden wird.

Diese Aufgabe wird mit einem Blindniet nach den Ansprüchen 1 und 3 gelöst.

Hierbei wirkt der Klebstoff beim Einziehen des Nietdorns als Gleitmittel, so daß Kaltschweißen auch dann sicher vermieden wird, wenn Nietschaft und Niethülse jeweils aus einem Leichtmetall bestehen.

Zusätzlich wirkt der Klebstoff als Korrosionsschutz.

Die Erfindung ist anhand der Zeichnung dargestellt und nachfolgend näher erläutert. Es zeigen
- Fig. 1: einen Blindniet zum Verbinden zweier Bauteile,
- Fig. 2: die Einzelheit 11 nach Fig. 1,
- Fig. 3: den Blindniet nach Fig. 1 mit angezogenem Nietdorn,
- Fig. 4: den Blindniet nach Fig. 2 mit fertigem Schließkopf,
- Fig. 5: den Blindniet nach Fig. 3 im Endzustand und
- Fig. 6: eine weitere Ausgestaltung eines Blindniets.

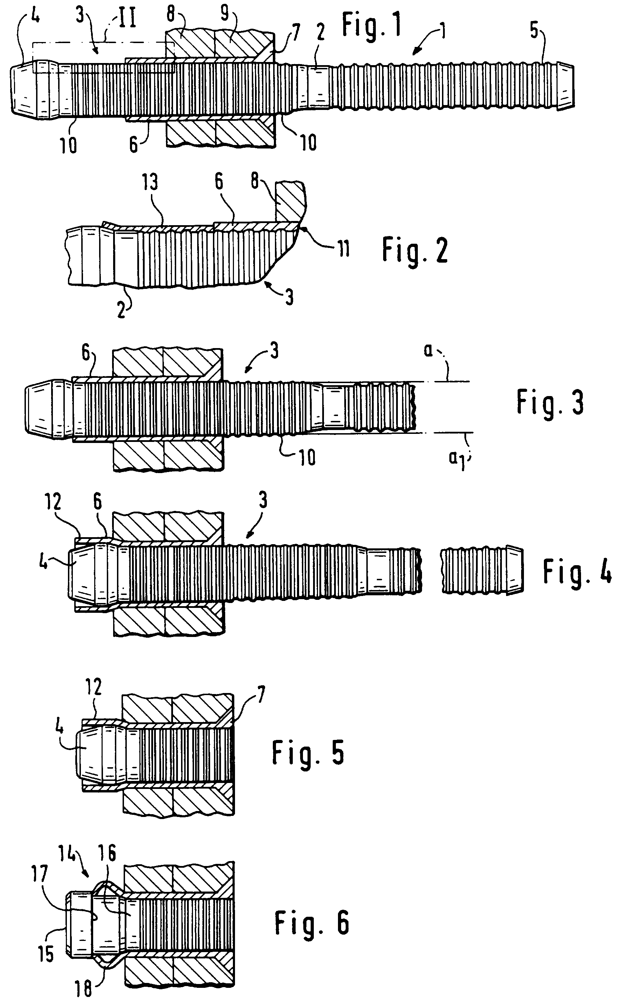

Figur 1 zeigt einen Blindniet 1, bestehend aus einem Nietdorn 2 mit einem konischen Bereich 3, einem verdickten Ende 4 und einem Zugende 5, wobei der Nietdorn 2 in eine Niethülse 6 mit einem als Senkkopf ausgebildeten Setzkopf 7 eingesetzt ist. Mittels des Blindniets 1 werden zwei Teile 8 und 9 miteinander verbunden. Die Durchmesser der den Niet aufnehmenden Bohrungen liegen in, einem vorbestimmten Toleranzbereich. Der konische Bereich 3 ist mit umlaufenden Rillen 10 versehen. Die Innenfläche der Niethülse 6 ist glatt. Auf den aus der Niethülse 6 herausragenden schließkopfseitigen Teil des Nietdorns 2 ist ein anaerober Klebstoff aufgetragen, so daß die betreffenden Rillen 10 satt damit gefüllt sind. Der Klebstoff ist in Mikrokapseln eingeschlossen, die ihrerseits in ein geeignetes Bindemittel eingebettet sind. Ein entsprechender Klebstoff ist beispielsweise unter der Markenbezeichnung "Loctite Driloc" bekannt. In der dargestellten bevorzugten Ausgestaltung des Blindniets ist dieser bereits im Anlieferzustand mit Klebstoff versehen. Zum Setzen dieses Blindniets wird ein hier nicht gezeigtes Werkzeug verwendet, das auf das Zugende 5 eine axiale Zugkraft ausgeübt, wobei sich das Werkzeug zum Aufbringen einer Gegenkraft am Setzkopf 7 abstützt.

Fig. 2 zeigt die Einzelheit II nach Fig. 1 mit dem konischen Teil 3 des Nietdorns 2, der Niethülse 6 und dem zu verbindenden Teil 8. Dabei ist die zwischen der Hülse 6 und dem Dorn 2 bestehende Fuge mit 11 bezeichnet. Der Klebstoff 13 ist auf das freie schließkopfseitige Ende des Nietdorns 2 aufgetragen. Die Längserstreckung des freien schließkopfseitigen Endes des Nietdorns 2 kann so bestimmt werden, daß der Klebstoff 13 beim Ziehen des Nietdorns 2 bis in den Setzkopf 7 gelangt.

Durch Betätigen des Werkzeuges wird die in Fig. 3 gezeigte Position des Nietdorns erreicht. In dieser Position berührt das verdickte Ende 4 gerade den Rand des überstehenden Teils der Niethülse. Bei weiterem Ziehen tritt das verdickte Ende 4 in die Hülse 6 ein, wodurch der Schließkopf gebildet wird. Die im Bild nach rechts konvergierenden Umrißmantellinien a und a₁ verdeutlichen dessen Konusform. Während des Ziehvorgangs wirken starke radiale Druckkräfte von der Hülse 6 auf den Dorn 2. Hierdurch werden die zwischen den einzelnen Rillen 10 befindlichen Materialbereiche plastisch abgeflacht, was zur völligen Glättung des Dorns 2 führen kann. Dabei werden die Mikrokapseln zerstört, so daß der flüssige Klebstoff 13 freigesetzt und in der Fuge 11 verteilt wird. Beim Einziehen des Dorns 2 wirkt der in der Fuge 11 befindliche anaerobe Klebstoff 13 als Gleitmittel, so daß weder die Hülse 6 noch der Dorn 2 durch Kaltschweißen beschädigt werden. Hierdurch wird die Möglichkeit eröffnet, den Dorn 2 aus leichten bisher aufgrund ihrer Neigung zum Kaltschweißen ungeeigneten Werkstoffen wie Aluminium oder Titan herzustellen.

In Fig. 4 ist die Position des Nietdorns am Ende des Ziehvorganges gezeigt. In dieser Position hat das verdickte Ende 4 gerade den Teil der Hülse 6 erreicht, der vom Material des Teils 8 fest umschlossen ist. Hierdurch setzt ein sprunghafter Anstieg der Zugkraft ein und der Ziehvorgang wird abgeschaltet. In dieser Position des Dorns 2 ist der Schließkopf 12 fertiggestellt und weist die gezeigte Formgebung auf. Während des gesamten Ziehvorganges findet infolge der konischen Form des Nietdorns eine stetige Aufweitung der Niethülse statt, so daß sich am Ende des Ziehvorganges im Zusammenwirken mit dem vorbestimmten Toleranzfeld der Bohrungen innerhalb der Bohrungsränder vorbestimmte Ringspannungen einstellen, die für den exakten Sitz des Blindniets 1 maßgebend sind. Obwohl infolge des Klebstoffs 13 eine Reduzierung des Reibwertes zwischen Hülse und Dorn eintritt, ist der Dorn 2 am Ende des Ziehvorgangs aufgrund seiner Geometrie, also aufgrund einer Keilwirkung, sicher fixiert.

Fig. 5 zeigt den Blindniet 1 in fertig eingebautem Zustand mit dem Schließkopf 12, wobei das Zugende 5 durch einen besonderen Arbeitsgang abgetrennt worden ist. Die Aushärtung des Klebstoffs 13 beginnt mit dessen Verteilung innerhalb der Fuge 11 und ist bei Raumtemperatur etwa nach 24 Stunden abgeschlossen. Durch die erfindungsgemäße Anwendung des Klebstoffs 13 erhält der Nietdorn eine zusätzliche dauerhafte Sicherung gegen Lockern, so daß der auf die vorbeschriebene Weise ausgebildete Blindniet in seinem Festigkeitsverhalten weitgehend einem Vollniet entspricht.

Fig. 6 zeigt eine andere Ausgestaltung eines Blindniets in eingebautem Zustand. Hierbei ist der Schließkopf 14 durch Stauchung eines überstehenden Teils der Niethülse gebildet. Dies wird dadurch erreicht, daß das verdickte Ende 15 des Nietschaftes 16 eine Schulter 17 aufweist, wodurch die Stauchkraft während des Ziehvorgangs in die Niethülse eingeleitet wird. Dadurch entsteht ein Wulst 18, der praktisch den Schließkopf bildet

Es ist auch denkbar, daß die Niethülse mindestens auf ihrer Innenfläche eine Beschichtung mit Klebstoff erhält.

Außer dem bereits genannten kommen alle geeigneten Klebstoffe, insbesondere Reaktionsklebstoffe, in Betracht. Auch hierbei ist eine vorteilhafte Verwendung von Mikrokapseln denkbar, indem diese beispielsweise in ein reaktionsfähiges Harz eingebettet sind und einen Härter enthalten, der die Härtereaktion in Gang setzt, sobald die Mikrokapseln zerstört sind.

Es ist auch denkbar, daß die Mikrokapseln in ein hinsichtlich der Abbindereaktion neutrales Bindemittel eingebettet sind und teils ein reaktionsfähiges Harz und teils einen Härter enthalten.

## Patentansprüche

1. Blindniet, insbesondere für den Flugzeugbau zur Herstellung von Nietverbindungen an tragenden Bauteilen, bestehend aus einem ein verdicktes Ende und ein Zugende aufweisenden Nietdorn, der in einem konischen Bereich mit umlaufenden Rillen versehen ist, wobei der Nietdorn in eine Niethülse mit einer konischen Innenfläche und einer zylindrischen Außenfläche und einem Setzkopf axial eingeschoben ist, dadurch **gekennzeichnet,** daß der Blindniet einen Vorrat eines Klebstoffs, in den Rillen (10), aufweist, der beim Einziehen des Nietdorns als Gleitmittel wirkt und nach dem Setzen des Blindniets in der zwischen der Niethülse (6) und dem Nietdorn (2) bestehenden Fuge aushärtet.

2. Blindniet nach Anspruch 1, dadurch **gekennzeichnet,** daß der Klebstoff auf den aus der Niethülse (6) herausragenden schließkopfseitigen Teil des Nietdorns (2) aufgetragen ist.

3. Blindniet, insbesondere für den Flugzeugbau zur Herstellung von Nietverbindungen an tragenden Bauteilen, bestehend aus einem ein verdicktes Ende und ein Zugende aufweisenden Nietdorn, der in einem konischen Bereich mit umlaufenden Rillen versehen ist, wobei der Nietdorn in eine Niethülse mit einer konischen Innenfläche und einer zylindrischen Außenfläche und einem Setzkopf axial eingeschoben ist, dadurch **gekennzeichnet,** daß die Niethülse auf ihrer Innenfläche eine Beschichtung mit Klebstoff erhält, der beim Einziehen des Nietdorns als Gleitmittel wirkt und nach dem Setzen des Blindniets in der zwischen der Niethülse und dem Nietdorn bestehenden Fuge aushärtet.

4. Blindniet nach einem der Ansprüche 1 bis 3, dadurch **gekennzeichnet,** daß der Klebstoff in Mikrokapseln enthalten ist, die beim Einziehen des Nietdorns (2) zerstört werden.

5. Blindniet nach einem der Ansprüche 1 bis 4,dadurch **gekennzeichnet,** daß die Mikrokapseln in ein neutrales Bindemittel eingebettet sind und teils Harz und teils Härter enthalten.

## Claims

1. Blind rivet, in particular for aircraft construction to produce riveted joints on load-bearing structural members, consisting of a rivet pin which comprises a thickened end and a pull end and is provided with encircling grooves in a conical area, the rivet pin being inserted axially in a rivet tube with a conical inner surface, a cylindrical outer surface and a set head, characterised in that the blind rivet comprises a supply of an adhesive, in the grooves (10), which acts as a sliding agent when the rivet pin is pulled in and hardens in the gap between the rivet tube (6) and the rivet pin (2) after the blind rivet has been set.

2. Blind rivet according to claim 1, characterised in that the adhesive is applied to the part of the rivet pin (2) which projects out of the rivet tube (6) and is on the closing head side.

3. Blind rivet, in particular for aircraft construction to produce riveted joints on load-bearing structural members, consisting of a rivet pin which comprises a thickened end and a pull end and is provided with encircling grooves in a conical area, the rivet pin being inserted axially in a rivet tube with a conical inner surface, a cylindrical outer surface and a set head, characterised in that the inner surface of the rivet tube is coated with an adhesive which acts as a sliding agent when the rivet pin is pulled in and hardens in the gap between the rivet tube and the rivet pin after the blind rivet has been set.

4. Blind rivet according to one of claims 1 to 3, characterised in that the adhesive is contained in microcapsules which are destroyed when the rivet pin (2) is pulled in.

5. Blind rivet according to one of claims 1 to 4, characterised in that the microcapsules are embedded in a neutral binding agent and some contain resin and some hardener.

## Revendications

1. Rivet borgne utilisé en particulier en construction aéronautique pour la fabrication d'assemblages rivés sur des pièces de structure, ledit rivet borgne se composant d'une tige centrale présentant une extrémité de plus grand diamètre et une extrémité permettant la traction, cette tige centrale étant pourvue dans une zone conique de rainures circulaires et pouvant être introduite axialement dans un manchon de rivet présentant une surface intérieure conique et une surface extérieure cylindrique, de même qu'une tête de rivet, caractérisé en ce qu'il présente une réserve de colle dans les rainures (10), cette colle servant de lubrifiant lors du tirage de la tige centrale et se durcissant par précipitation après la mise en place du rivet borgne dans l'espace séparant le manchon de rivet (6) de la tige centrale (2).

2. Rivet borgne selon la revendication 1, caractérisé en ce que la colle est déposée sur la partie de la tige centrale faisant saillie du manchon de rivet (6) côté tête de fermeture.

3. Rivet borgne utilisé en particulier en construction aéronautique pour la fabrication d'assemblages rivés sur des pièces de structure, ledit rivet borgne se composant d'une tige centrale présentant une extrémité de plus grand diamètre et une extrémité permettant la traction, cette tige étant pourvue dans une zone conique de rainures circulaires et pouvant être introduite axialement dans un manchon de rivet présentant une surface intérieure conique et une surface extérieure cylindrique, de même que d'une tête de rivet, caractérisé en ce que le manchon de rivet est recouvert sur sa surface intérieure d'une couche de colle servant de lubrifiant lors du tirage de la tige centrale et se durcissant après la mise en place du rivet borgne dans l'espace séparant le manchon de rivet de la tige centrale.

4. Rivet borgne selon l'une ou l'autre des revendications 1 à 3, caractérisé en ce que la colle est contenue dans des microcapsules qui sont détruites lors du tirage de la tige centrale (2).

5. Rivet borgne selon l'une ou l'autre des revendications 1 à 4, caractérisé en ce que les microcapsules sont plongées dans un liant neutre, de même qu'elles sont composées partiellement de résine et partiellement de durcisseur.
